# EUROPEAN PATENT APPLICATION

(11) **EP 4 104 905 A1**
(43) Date of publication of application: **21.12.2022**
(21) Application number: 21382537.5
(22) Date of filing: 18.06.2021
(51) Int. Cl.: A62C 3/07, A62C 35/68, A62C 99/00, F16L 55/16

(54) **FIRE SUPRESSION SYSTEMS AND METHODS**

(71) Applicant: Carrier Corporation, Farmington, Connecticut 06034-4015 (US)
(72) Inventor: MOIX, Pere, 08024 Barcelona (ES)
(74) Representative: Dehns

(57) **Abstract**

A fire suppression system is disclosed, comprising: a controller; a plurality of nozzles configured to output a fire supressing agent to supress a fire; one or more sources of fire supressing agent; and a conduit for supplying the agent from the one or more sources to the plurality of nozzles; wherein the conduit has a plurality of sections and a plurality of valves for controlling which of the plurality of sections the agent is supplied into from the one or more sources; and wherein the controller is configured to, in response to a fire being detected: determine at least one nozzle of the plurality of nozzles that is required for supressing the fire; cause the agent to be supplied into the conduit from the one or more sources; and control the plurality of valves to supply the agent from the one or more sources to the at least one nozzle via the conduit; wherein for one or more sections of the plurality of sections of the conduit that the agent is supplied into, the controller is configured to control the plurality of valves by: determining whether a pressure of the agent inside a current section of the conduit is above or below a threshold; and when the pressure is above the threshold, opening a valve to supply the agent from the current section into a next section of the conduit; but when the pressure is below the threshold, controlling the valves to supply the agent to the at least one nozzle while bypassing the current section of the conduit.

## Description

### FIELD

The present disclosure relates to fire suppression systems and, in particular, to fire suppression systems that allow for one or more sections of a conduit suspected as having a leak to be bypassed when a fire supressing agent is supplied via the conduit to nozzles that output the agent to supress a fire.

### BACKGROUND

A fire suppression system for a building or a large vehicle, such as a train, commonly comprises a set of nozzles (e.g. sprinklers) that are supplied with a fire supressing agent from a common source. In these systems, a pipe for supplying the fire supressing agent to the nozzles may be kept "empty" (i.e. not contain the fire supressing agent) until a suspected fire is detected. When a suspected fire is detected, the pipe may then be filled with a fire supressing agent from a suitable supply/reservoir and supply the fire supressing agent to the nozzles for supressing the fire. Such systems are sometimes referred to as "dry pipe" sprinkler systems.

Systems that operate in this manner, where the pipe is only supplied with the fire supressing agent in response to a suspected fire being detected, can avoid problems such as the fire supressing agent freezing inside the pipe during a period of low ambient temperature. However, a potential problem of such systems is that a leak in the pipe (e.g. when damage has occurred) may not be detected until the fire suppression system is activated to try and supress a fire. To try and mitigate a potential leak preventing the fire suppression system from successfully supressing a fire, an excess of fire supressing agent may be stored in the system (e.g. in one or more "back-up" supplies) to try and account for any fire supressing agent that may be lost/wasted in the event of a leak. However, a leak may still be detrimental to how effectively the system can supress a fire. Furthermore, fire supressing agent that has leaked in an undesirable location can potentially cause damage to the surrounding environment and/or result in increased "down time" while this is resolved.

### SUMMARY

From a first aspect, the present disclosure provides a fire suppression system comprising: a controller; a plurality of nozzles configured to output a fire supressing agent to supress a fire; one or more sources of fire supressing agent; and a conduit for supplying the agent from the one or more sources to the plurality of nozzles, wherein the conduit has a plurality of sections and a plurality of valves for controlling which of the plurality of sections the agent is supplied into from the one or more sources; and wherein the controller is configured to, in response to a fire being detected: determine at least one nozzle of the plurality of nozzles that is required for supressing the fire; cause the agent to be supplied into the conduit from the one or more sources; and control the plurality of valves to supply the agent from the one or more sources to the at least one nozzle via the conduit; wherein for one or more sections of the plurality of sections of the conduit that the agent is supplied into, the controller is configured to control the plurality of valves by: determining whether a pressure of the agent inside a current section of the conduit is above or below a threshold; and when the pressure is above the threshold, opening a valve to supply the agent from the current section into a next section of the conduit; but when the pressure is below the threshold, controlling the valves to supply the agent to the at least one nozzle while bypassing the current section of the conduit.

As the agent is caused to be supplied from the one or more sources into the conduit in response to a fire being detected, potential problems described above associated with the agent (always) being stored inside the conduit can be avoided. For instance, this avoids the agent potentially freezing inside the conduit.

However, in fire suppression systems in accordance with the present disclosure, rather than the agent being initially supplied into the entirety of the conduit from a particular source, one or more valves can be used to control which sections of the conduit the agent is supplied into.

In this regard, not all of the nozzles available in the system that can be supplied via the conduit may be required to supress a fire (e.g. because the fire is only located in a particular location). Therefore, the agent does not necessarily need to be supplied into all of the sections of the conduit in order to suitably supply the nozzle(s) required for supressing a fire.

By not supplying the agent into sections of the conduit that are not required for supplying the required nozzle(s), less agent may be required to suitably supress the fire. This can also reduce the amount of maintenance time required to restore the system after the fire has been supressed. For instance, any sections of the conduit containing agent after the fire has been supressed will typically need to have the agent removed and those sections re-pressurised with a gas. Therefore, if the number of sections of the conduit that the agent is supplied into is reduced, this can reduce maintenance time/costs after the fire has been supressed.

Although only particular sections of the conduit may be required to supply the agent from a source to the required nozzle(s), if there are different routes using different sections of the conduit (and preferably different sources) that can supply the agent to the required nozzle(s), this can allow the system to still suitably operate when there is an unexpected problem with a particular route to the required nozzle(s).

For example, a leak in a section of the conduit and/or an insufficient amount of agent being available from a source to fill a section of the conduit may require a different route through the conduit to be used instead of the route initially selected/intended. In other words, it may be that one or more sections of the conduit should be bypassed in order to suitably supply the required nozzle(s). This means that agent is supplied from at least one of the sources to the required nozzle(s) without passing through those sections of the conduit that are bypassed, despite those sections of the conduit having previously been supplied with agent. This can be achieved by selecting different section(s) of the conduit for supplying the required nozzle(s) (e.g. from a different source) and/or closing one or more of the valves to prevent the further supply of agent to those sections that are to be bypassed.

Whether a current section of the conduit (i.e. the section for which this is being determined) should be bypassed can be determined by determining whether a pressure of the agent inside the current section of the conduit is above or below a threshold.

In this regard, when the agent is confined within the conduit, the pressure of the agent in the conduit will be based on the volume of the sections of the conduit that the agent has been supplied into and the amount of agent that has been supplied into those sections of the conduit. This means that by setting an appropriate threshold, it may be determined whether the agent has suitably filled a section of the conduit by determining whether a pressure of the agent inside that section of the conduit is above or below the threshold.

When the agent has suitably filled a section of the conduit, this will be identified by determining that a pressure of the agent in that section of the conduit is above the threshold. A valve to a next section of the conduit can then be opened to continue to supply the agent through the conduit to (try to) supply the agent to the required nozzle(s) via the those sections.

However, when the agent has failed to suitably fill a section of the conduit (e.g. in the case of a leak) this will be identified by determining that a pressure of the agent in that section of the conduit is below the threshold. In response to this, the valves can be controlled so that the agent is supplied to the required nozzle(s) while bypassing that section of the conduit.

Although this test could be carried out for any one of the sections of the conduit that the agent is supplied into, preferably it is performed for plural sections of the conduit. For instance, it may be carried out for plural consecutive sections of the conduit. This would mean that when the agent is supplied from a current section into a next section of the conduit, the same test of determining whether a pressure of the agent is above or below a threshold could then be performed for at least that next section. Indeed, the system may be operable to perform this same test for any (or all of) the sections of the conduit. For each section, this may be used to control whether a valve is opened to supply the agent into the next section, unless the agent has been supplied into all of the sections required for supplying the required nozzle(s), in which case the agent may then be output from the nozzle(s) to supress the fire.

For each of plural sections of the plurality of sections of the conduit that the agent is supplied into, the controller may be configured to control the plurality of valves by: determining whether a pressure of the agent inside a current section of the conduit is above or below a threshold; and when the pressure is above the threshold, opening a valve to supply the agent from the current section into a next section of the conduit; but when the pressure is below the threshold, controlling the valves to supply the agent to the at least one nozzle while bypassing the current section of the conduit.

Each section of the conduit may have one or more of the plurality of nozzles connected thereto. However, sections of the conduit may be used to supply the agent to other sections of the conduit without the agent being output from all of the nozzles accessible from those sections of the conduit that the agent has been supplied into. Alternatively, at least some of the sections of the conduit may not have any nozzles connected (directly) thereto and instead those sections are to only be used to supply other sections of the conduit.

The controller may determine which nozzle(s) of the plurality of nozzles are required for supressing the fire in any suitable manner. For instance, this may be based on the proximity of the nozzles to the location of a fire detector (e.g. smoke or heat detector) that has detected a suspected fire.

The controller may determine whether a pressure of the agent inside a section of the conduit is above or below a threshold using any suitable indication of the pressure of the agent inside that section. For instance, the system may comprise a pressure sensor (e.g. manometer) configured to measure a pressure of the agent inside the conduit and provide an indication of the measured pressure to the controller. The controller may determine whether a pressure of the agent inside a current section of the conduit is above or below a threshold using an indication of a measured pressure provided by a pressure sensor. The pressure of the agent in a section should be measured once the agent has been supplied into that section and may be measured, for example, after a suitable amount of time after the agent has initially been supplied into that section but before the agent has been supplied from that section to a next section. Each section of the conduit may have a separate pressure sensor. However, as the pressure of the agent may be the same in the different sections it has currently been supplied to, a single pressure sensor could be provided capable of measuring the pressure for plural different sections that the agent may be supplied into in turn. For example, there may be a pressure sensor for each source of the agent.

The threshold may be different for different respective sections of said conduit.

Alternatively, it would be possible to (and the system may be operable to) use the same threshold for all of the sections of the conduit. In this regard, the pressure of the agent in the conduit is expected to decrease as it is supplied into additional sections of the conduit (so that the volume that the agent has access to increases). Therefore, by setting the threshold at a pressure representing, for example, the minimum pressure required for the agent to suitably fill all of the sections of the conduit, any pressure below this value may indicate that the current section has been insufficiently filled with agent at a suitable pressure (e.g. due to a leak) so that the current section would be unable to suitably supply the agent to the remaining sections of the conduit for supplying the required nozzle(s).

However, by determining and using different thresholds for different sections of the conduit, the system may more accurately determine whether there is a leak in a particular section and/or whether or not that section could be used to suitably supply particular nozzle(s) required to supress a fire in a particular location (e.g. the nozzles that are directly connected to that section of the conduit).

The one or more values used as thresholds may be determined in any suitable manner. For instance, the controller may use value(s) that have been pre-programmed into the system based on experimental measurements and/or theoretical calculations. However, the controller may also or instead calculate a threshold for a section based on the threshold for a different section and/or based on which other sections are used for supplying that section with the agent.

The controller may be configured to determine each of the different thresholds for the different respective sections by at least one of: (i) retrieving a value for a threshold from memory; (ii) calculating a threshold for a section based on the threshold for a different section; or (iii) calculating a threshold for a section based on which other sections are used for supplying that section with the agent.

In this regard, sections of the conduit closer to a source of the agent may be suitably supplied from that source at a lower pressure than sections of the conduit further from that source. By considering which other sections are used for supplying a current section of the conduit, the proximity of the current section to the source (in terms of the volume of the conduit accessible) can be taken account of. Additionally or alternatively, one threshold may be determined based on another threshold (e.g. by taking into account the difference in accessible volume when the agent is supplied to the different sections associated with those thresholds).

A pressure value may be assigned to each section of the conduit for filling each respective section with fire supressing agent, and the controller may determine the threshold for any given one of the sections by summing the pressure value for said any given one of the sections with the pressure value(s) for the section(s) that have been used to supply said any given one of the sections with the fire supressing agent.

In this embodiment, each section is assigned a particular pressure value based on the pressure required to suitably fill the additional volume of that section. The threshold for a current section may then be determined by summing the values for that current section and all other sections between the current section and the source supplying it.

The system may comprise a single source of fire supressing agent. In this case, the conduit may form a loop and the controller may be configured to control the valves to determine in which direction around the loop the agent is supplied (based on any sections of the conduit that are determined to be required to be bypassed to reach the required nozzles).

Alternatively, the system may comprise a plurality of sources of fire supressing agent. In this case, the system may be operable to (try to) supply the required nozzle(s) from more than one source in parallel. Alternatively, a source may be triggered to supply the agent into the conduit (only) in response to it being determined that a previous source is unable to supply the required nozzles while bypassing a particular section for which it has been determined that a pressure of the agent in that section is below a threshold pressure.

The one or more sources may be plural sources of fire supressing agent, and the controller may be configured to: select a first of the one or more sources for supplying the agent to the at least one nozzle; and cause the agent to be supplied from the first source into the conduit; wherein for one or more sections of the plurality of sections of the conduit that the agent is supplied into from the first source, the controller is configured to control the plurality of valves by: determining whether a pressure of the agent inside a current section of the conduit is above or below a threshold; and when the pressure is above the threshold, opening a valve to supply the agent from the first source into a next section of the conduit via the current section; but when the pressure is below the threshold, selecting a second source of the one or more sources for supplying the agent to the at least one nozzle and supplying the agent to the at least one nozzle from the second source through a different part of the conduit so as to bypass the current section of the conduit.

Any suitable source of fire supressing agent may be used. For example, the source may be a reservoir (e.g. pressurised cylinder) containing the agent. The agent may be supplied from the source (e.g. reservoir) to the conduit using a pump such as a gas pump or an electrical pump that can be triggered by the controller.

The fire supressing agent may be any suitable fluid. For example the fire supressing agent may comprise water. The agent may comprise a mixture of a liquid and a gas.

When multiple sources are triggered to supply the agent into the conduit in succession, the order that the sources are triggered to be selected in may be determined in any suitable manner. For example, there may be a pre-programmed order that the sources are triggered in to define a "primary" source, "secondary" source and so on. Alternatively, the order that the sources are triggered in may be based on which of the plurality of nozzles are determined to be required to supress the fire. For instance, this may be based on the source that can supply the required nozzle(s) via the shortest path through the conduit (e.g. based on the length of the conduit, or the number of sections of the conduit, required for that source to supply the required nozzles).

The controller may be configured to select which of the one or more sources is the first source based on which of the plurality of nozzles are determined to be required to supress the fire.

Multiple sources may be distributed throughout the system so that they can supply the conduit starting at different sections.

The conduit may have a first end and a second end, and the one or more sources may be plural sources of fire supressing agent comprising a first source and a second source. The first source may be connected to the first end of the conduit and the second source is connected to the second end of the conduit.

The controller may be configured to, when it is determined that a pressure inside the current section of the conduit is below the threshold, control the valves to prevent a further supply of the agent to that current section.

For example, when there is a source of fire supressing agent at each end of the conduit, in response to it being determined that a pressure of the agent in a current section of the conduit is below a threshold, one or more of the valves that control the supply of the agent from the source into the current section may be closed. This means that when the pressure in a section is unexpectedly low due to a leak, the amount of agent that exits the conduit via the leak can be minimised. This may be in addition to the system trying to supply the required valves starting from the other source at the other end of the conduit (to bypass the current section).

Although the system is configured for the agent to bypass one or more sections of the conduit where the pressure was determined to be below the threshold (i.e. where a leak is suspected), if the system cannot supply the required nozzle(s) while bypassing all of the relevant sections, the system may then take additional or alternative action. For example, this may be required when there are leaks in numerous sections of the conduit.

The controller may be configured to trigger an alarm when it is determined that the at least one nozzle cannot be supplied with the agent without using one of the sections for which it was determined that a pressure of the agent inside that section was below the threshold.

The concept of selectively opening a valve in the conduit between a source of fire supressing agent and a nozzle, dependent on the pressure in a section of the conduit, is believed to be new in its own right.

Accordingly, from a second aspect, the present disclosure also provides a fire suppression system comprising: a first source of fire supressing agent; one or more nozzles configured to output the fire supressing agent; a conduit for supplying the fire supressing agent from the first source to the one or more nozzles, wherein the conduit has a plurality of sections defined between a plurality of valves for controlling which of the plurality of sections the fire suppressing agent is able to be supplied into from the first source; a first pressure sensor located within the conduit for determining the pressure of the fire supressing agent from the first source; and control circuitry configured to determine, from the first pressure sensor, whether a pressure of the fire supressing agent inside a first of the sections of the conduit is above or below a threshold; and, if the pressure is above the threshold, open one of the valves so as to supply the fire supressing agent from the first section into an adjacent, downstream section of the conduit; whereas if the pressure is below the threshold, the control circuitry is configured to maintain said one of the valves closed so as to prevent fire supressing agent from being supplied from the first section into the adjacent, downstream section.

The system according to the second aspect may have any of the features described above in relation to the first aspect. The second aspect also provides a method of suppressing a fire using the system described above.

For example, the system may select said one or more nozzles to supply with first supressing agent (from a larger group of nozzles) based on where a smoke and/or heat detected has detected smoke and/or heat.

The fire suppression system may comprise: a second source of fire suppressing agent; and a conduit from the second source to the one or more nozzles, wherein this conduit has one or more valves therein for controlling the supply of fire suppressing agent from the second source to the one or more nozzles; wherein the control circuitry is configured such that, when it determines that the pressure of the fire supressing agent in the first section is below said threshold, the control circuitry opens said one or more valves in the conduit from the second source of fire supressing agent so that fire supressing agent is able to be supplied from the second source to the one or more nozzles.

The present disclosure also provides a vehicle, such as a train, comprising the fire suppression system described herein.

When the system is implemented in a train, there may be a different section of the conduit for each different carriage of the train, for example.

The present disclosure also provides a method of supressing a fire, comprising: providing a fire suppression system comprising: a plurality of nozzles; one or more sources of fire supressing agent; and a conduit for supplying the agent from the one or more sources to the plurality of nozzles, wherein the conduit has a plurality of sections and a plurality of valves for controlling which of the plurality of sections the agent can be supplied into from the one or more sources; and the method further comprising: determining at least one nozzle of the plurality of nozzles that is required for supressing the fire; and controlling the plurality of valves to supply the agent from the one or more sources to the at least one nozzle via the conduit by, for one or more sections of the plurality of sections of the conduit that the agent is supplied into: determining whether a pressure of the agent inside a current section of the conduit is above or below a threshold; and when the pressure is above the threshold, opening a valve to supply the agent from the current section into a next section of the conduit; but when the pressure is below the threshold, controlling the valves to supply the agent to the at least one nozzle while bypassing the current section of the conduit.

The method may comprise steps to perform any of the functionality of the system discussed above.

The method may comprise comprising controlling the plurality of valves to supply the agent from the one or more sources to the at least one nozzle via the conduit by, for each of plural sections of the plurality of sections of the conduit that the agent is supplied into: determining whether a pressure of the agent inside a current section of the conduit is above or below a threshold; and when the pressure is above the threshold, opening a valve to supply the agent from the current section into a next section of the conduit; but when the pressure is below the threshold, controlling the valves to supply the agent to the at least one nozzle while bypassing the current section of the conduit.

The one or more sources may be plural sources of fire supressing agent, and the method may comprise: selecting a first source for supplying the agent to the at least one nozzle; supplying the agent from the first source into the conduit; and for one or more sections of the plurality of sections of the conduit that the agent is supplied into from the first source: determining whether a pressure of the agent inside a current section of the conduit is above or below a threshold; and when the pressure is above the threshold, opening a valve to supply the agent from the first source into a next section of the conduit via the current section; but when the pressure is below the threshold, selecting a second source for supplying the agent to the at least one nozzle and supplying the agent to the at least one nozzle from the second source through a different part of the conduit so as to bypass the current section of the conduit.

### BRIEF DESCRIPTION OF THE DRAWINGS

Various embodiments will now be described, by way of example only, and with reference to the accompanying drawings in which:
Fig. 1 shows a schematic of a fire suppression system in accordance with embodiments of the present disclosure;
Fig. 2 is a flowchart showing a method of operating a fire suppression system in accordance with embodiments of the present disclosure; and
Fig. 3 is a flowchart showing an example of a conventional method of operating a fire suppression system.

### DETAILED DESCRIPTION

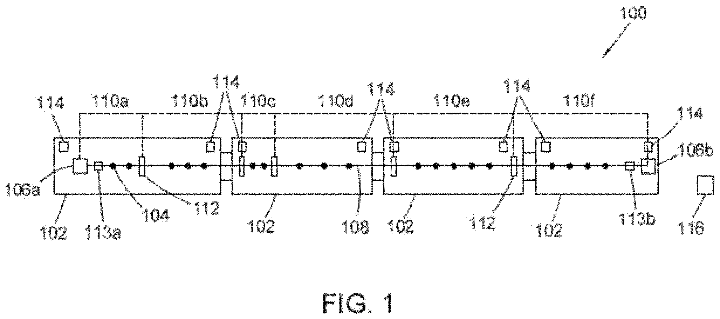

Figure 1 shows a schematic of a fire suppression system 100 in accordance with embodiments of the present disclosure. In the illustrated embodiment, the system 100 is installed in carriages 102 of a train. However, the system 100 could also be employed in other locations, such as in a building or a different vehicle such as a boat.

The system 100 comprises a plurality of nozzles 104 configured to output a fire supressing agent to supress a fire, sources 106a,106b of fire supressing agent and a conduit 108 for supplying the agent from the sources 106a, 106b to the plurality of nozzles 104.

As shown, the conduit 108 is divided into a plurality of sections 110a-110f by valves 112 that can control which of the sections 110a-110f of the conduit 108 the agent is supplied into from the sources 106a,106b. In the depicted embodiment, there are two sources 106a,106b and six sections 110a-110f throughout the four carriages 102 of the train. However, any number of sections 110 and/or sources 106 (and/or carriages 102) could be provided.

Each section 110 contains some of the nozzles 104 of the system 100 for supressing a fire proximate to that section 110 (e.g. in the same carriage 102). However, sections 110 may be provided that are not directly connected to any of the nozzles 104 and instead are for supplying other sections 110 that then supply the nozzles 104.

The system 100 may be operable so that only some of the nozzles 104 may be deployed at once. For example, nozzles 104 that are not in the same carriage 102 as a fire is detected to be located may not be required to output fire supressing agent to supress the fire.

The system 100 also comprises pressure sensors 113a,113b for measuring a pressure inside the conduit 108, fire detectors 114 (e.g. smoke and/or heat detectors) for detecting that a fire has started, and a controller 116 (e.g. control circuit) in the form a fire control panel. In the depicted embodiment, there is a pressure sensor 113a for measuring pressures in the conduit 108 when agent is supplied from source 106a and a pressure sensor 113b for measuring pressures in the conduit 108 when agent is supplied from source 106b.

In normal operation (i.e. when a fire has not been detected), the fire supressing agent is not stored in the conduit 108 and is instead stored in the sources 106 which may be, for example, tanks or cylinders. However, when a fire is detected by a fire detector 114, a signal is sent from the detector 114 to the controller 116 and the controller 116 determines which of the nozzles 104 are required to supress the fire (for example, it may be that only the nozzles 104 that are in the same carriage 102 as the detector 114 that has detected the fire are required to supress the fire). The controller then triggers one of the sources, such as source 106a, to supply the agent into the first (nearest) section 110a of the conduit 108 connected to that source 106a.

Once the agent has been supplied into the first section 110a, the appropriate pressure sensor 113a (i.e. the one for the triggered source) measures a pressure of the agent in the first section 110a and provides an indication of this to the controller 116. The controller 116 then uses this to determine whether the pressure of the agent in the first section 110a is above or below a threshold pressure required for that section 110a. This can be used as an indication of whether the first section 110a has been suitably filled with the agent (or whether there is, for example, a leak in that section).

When the pressure is above the threshold, the controller 116 opens the appropriate valve 112 (i.e. the one at the downstream end of the first section) so as to supply the agent from the first section 110a into the next, downstream section 110b of the conduit 108. This can be done in any suitable manner. For example, the valves 112 may be solenoid valves that can be activated electronically by the controller 116. Once the agent has been supplied into said next section 110b, the process may then be sequentially repeated in the same manner for each subsequent downstream section 110 until all of the sections 110 required to supply the required nozzle(s) 104 (i.e. the nozzle(s) required for supressing the fire) have been filled with the agent. The nozzle(s) 104 required for supressing the fire can then output the agent to supress the fire.

However, if it is determined that the pressure of the agent in a section 110 is below said threshold pressure required for that section, the controller 116 responds to this by not opening the valve 112 to supply agent from that section into the next, downstream section. Additionally, the controller 116 may close all of the valves 112 between that section 110 and the source 106 that supplied it with the agent. This means that when a leak in a section 110 causes a pressure of the agent that is supplied into that section 110 to be below the threshold pressure required for that section 110, the amount of water that leaks out of that section 110 can be minimised.

The controller 116 then triggers the other source 106b to supply the agent into the first (nearest) section 110f of the conduit 108 that is connected to that source 106b. Once the agent has been supplied into the first section 110f, the appropriate pressure sensor 113b (i.e. the one for the triggered source 106b) measures a pressure of the agent in the first section 110f and provides an indication of this to the controller 116. The controller 116 then uses this to determine whether the pressure of the agent in the first section 110f is above or below a threshold. This can be used as an indication of whether the first section 110f has been suitably filled with the agent (or whether there is, for example, a leak in that section). When the pressure is above the threshold, the controller 116 opens the appropriate valve 112 (i.e. the one at the downstream end of the first section 110f, away from source 106b) so as to supply the agent from the first section 110f into the next section 110e of the conduit 108. As described above, this can be done in any suitable manner. For example, the valves 112 may be solenoid valves that can be activated electronically by the controller 116. Once the agent has been supplied into said next section 110e, the process may then be sequentially repeated in the same manner for each subsequent section 110 until all of the sections 110 required to supply the required nozzle(s) 104 (i.e. the nozzle(s) required for supressing the fire) have been filled with the agent. The nozzle(s) 104 required for supressing the fire can then output the agent to supress the fire.

A particular example scenario will now be described, in which the system 100 is required to supply section 110c to supress a fire. In this example, the controller 116 determines, via a signal from detector 114, that the nozzles 104 in section 110c are required to dispense the fire suppressing agent in order to supress a fire that has been detected in the proximity of those nozzles 104. In response to this, the controller 116 triggers source 106a to supply agent into section 110a. Once the agent has been supplied into section 110a, pressure sensor 113a measures a pressure of the agent inside section 110a and provides an indication of this to the controller 116. The controller determines that the pressure is above a threshold associated with section 110a and, in response to this, opens the valve 112 between sections 110a and 110b so that the agent is supplied from source 106a to section 110b via section 110a. Once the agent has been supplied into section 110b, pressure sensor 113a measures a pressure of the agent inside section 110b and provides an indication of the measured pressure to the controller 116. As pressure sensor 113a is now fluidly connected to section 110b, this may be done without changing the location of sensor 113a. A leak in section 110b causes a pressure of the agent to be below a threshold required for section 110b and this is determined by the controller 116 from the indication of the pressure measured by sensor 113a for this section. In response, the controller 116 does not open the valve 112 in between sections 110b and 110c, closes the valves 112 that have been opened in-between source 106a and section 110b, and triggers supply 106b to supply agent into section 110f. Once the agent has been supplied into section 110f, pressure sensor 113b measures a pressure of the agent inside section 110f and provides an indication of this to the controller 116. The controller 116 determines that the measured pressure of the agent inside section 110f is above a threshold required for section 110f and, in response, opens the valve 112 in between sections 110f and 110e. This is then repeated for sections 110e and 110d, where the controller determines that a pressure of the agent in section 110e is above a threshold required for section 110e and, in response, opens the valve 112 in between section 110e and 110d, then determines that a pressure of the agent in section 110d is above a threshold required for section 110d and opens the valve 112 in between sections 110d and 110c to thereby supply section 110c. Once section 110c is supplied with the agent, the agent may be output from the nozzles 104 in section 110c to supress the fire. These nozzles may have been opened automatically in response to the fire (e.g. based on an increase in temperature caused by the fire) or may be triggered to be opened by the controller 116 before or after the agent is supplied into section 110c.

In the above example, as the agent that is supplied from source 106b bypasses (i.e. is not supplied to) section 110b, the agent supplied from source 106b is not able to leak out of section 110b. Furthermore, after the agent has been supplied from source 106a to section 110b, closing the valves 112 in between source 106a and section 110b reduces the amount of agent from source 106a that can leak out of section 110b.

The controller 116 may use the same threshold for each of sections 110a-f or may determine and use different thresholds for the different sections 110a-f. For example, a pressure of the agent from each of sources 106a-b may be 200 bar, the expected pressure of the agent when supplied from one of sources 106a-b to all of the sections 110 of the conduit may be 170 bar (with all nozzles 114 closed), and a pressure of 150 bar may be required for the conduit 108 to suitably supply the nozzles 104 from one of the sources 106 when all of the sections 110 of the conduit 108 are open (but all nozzles 114 are closed). In this case, the threshold of 150 bar may be used for all of the sections 110, as the pressure is not expected to drop below this value until the agent is output from the nozzles 104, unless there is a leak or some other loss of the expected amount of agent being supplied to the conduit 108.

Alternatively, the controller 116 may use a different threshold for different sections 110 of the conduit 108. For example, a pressure of at least 10 bar may be required to suitably supply section 110a from source 106a if only section 110a is accessible to the agent from source 106a, i.e. if the valve 112 on the downstream side of section 110a is closed. A pressure of at least 50 bar may be required to suitably supply section 110b if only sections 110a and 110b are accessible to the agent from source 106a, i.e. if the valve 112 on the downstream side of section 110a is open but the valve 112 on the downstream side of section 110b is closed. And a pressure of at least 70 bar may be required to suitably supply section 110c if only sections 110a-110c are open to source 106a, and so on. In this example, the controller 116 may use 10 bar, 50 bar, and 70 bar as the respective values for the thresholds for sections 110a, 110b, and 110c when those sections are supplied from source 106a. The difference in pressure of 20 bar between the pressures required for supplying sections 110b and 110c from source 106a should be the same as the difference in pressure between the pressures required for supplying sections 110c and 110d from source 106b. In other words, the additional pressure to fill a particular section 110 compared to the preceding section should be independent of which side of the section 110 the agent is supplied from (i.e. whether it is suppled from the preceding section on one side or the other of the section in question). However, a larger (overall) pressure may be required for suitably supplying section 110c from source 106b than that for source 106a, on account of the additional accessible volume in sections 110d-110f that are required for supplying section 110c from source 106b (compared to that for sections 110a-110b).

To take account of this, the controller 116 may store values representing the additional pressure required to suitably supply a section 110 (compared to a preceding section). These values may be determined experimentally or theoretically. In the above example, these would be 40 bar for section 110b and 20 bar for section 110c (i.e. the differences between 10 bar and 50 bar, and 50 bar and 70 bar respectively). This means that, to determine the threshold pressure (at sensor 113a) required for supplying section 110b from 110a, the controller may sum the threshold pressure of 10 bar required for supplying section 110a and the additional 40 bar required for additionally supplying section 110b, to thereby determine a threshold pressure of 50 bar required for section 110b. To determine the threshold pressure (at sensor 113a) required for supplying section 110c from source 106a, the controller 116 may sum the threshold pressure of 50 bar required for supplying section 110b and the additional 20 bar required for additionally supplying section 11 0c, to thereby determine a threshold pressure (at sensor 113a) of 70 bar for section 110c. If instead section 110c is to be supplied from source 106b, and a threshold pressure of 80 bar, for example, is required (at sensor 113b) for suitably supplying section 110d from source 106b, the controller 116 may determine the threshold pressure (at sensor 113b) for section 110c by summing the value of 80 bar and the 20 bar required to supply 110c to thereby determine a threshold pressure (at sensor 113b) of 100 bar for section 110c.

To determine a threshold pressure (at sensor 113b) for supplying section 110b from source 106b, the controller 116 may sum the threshold pressure of 100 bar (at sensor 113b) required for supplying section 110c with the value of 40 bar required for supplying section 110b, to thereby determine a threshold pressure (at sensor 113b) of 140 bar for supplying section 110b from source 106b.

Otherwise, the controller 116 may store two pressure thresholds for each section, one for supplying the section from each of the two sources 106a,106b respectively. Any other suitable method of determining appropriate thresholds could also be used.

Using different thresholds for different sections 110 allows the system to more accurately determine whether a particular section 110 has been suitably supplied. For instance, a section 110 closer to a source 106 may require a lower pressure to be suitably supplied by that source compared to a section 110 further from that source 106. However, a single common threshold for all of the sections may still be suitable for detecting an unexpected drop in pressure for any particular section.

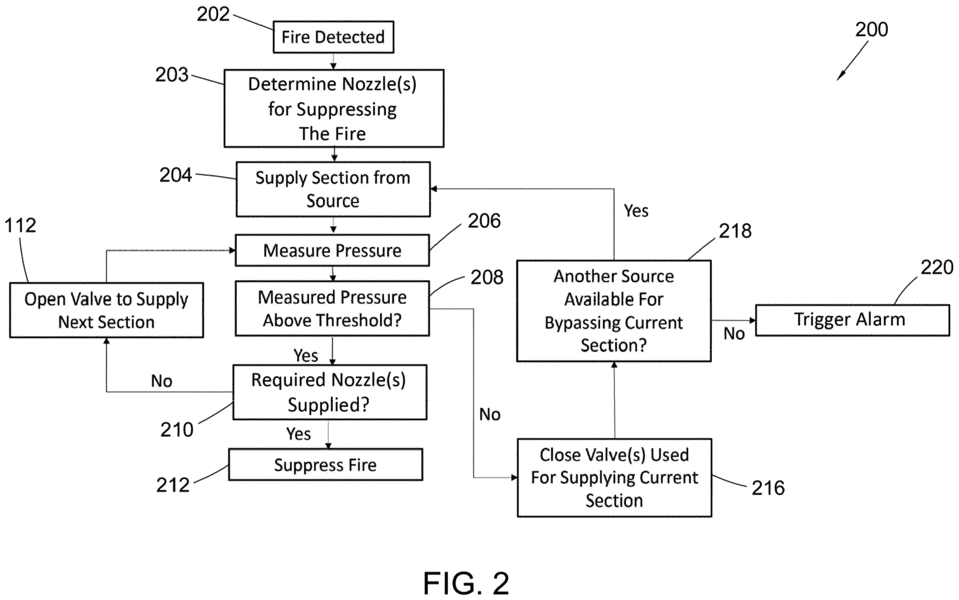

The operation of a fire suppression system in accordance with the embodiments of the present disclosure (such as system 100 shown in Figure 1) will now be described more generally with reference to Figure 2.

Figure 2 is a flowchart of a method 200 of operating a fire suppression system in accordance with embodiments of the present disclosure, starting with a fire being detected (step 202). In response to the fire being detected, a controller 116 determines at least one nozzle 104 that is required for supressing the detected fire (step 203). For example, the controller may determine that one or more nozzle 104 that is arranged in the same carriage as the detector 114 that detected the fire is desired to dispense the fire supressing agent. A (first) source 106 of fire supressing agent is then caused to supply the agent into a (first) section 110 of the conduit 108 (step 204). This may be implemented by opening a valve 112 between the selected source 106 and the section 110 or in any other suitable manner. Next, a pressure of the agent in the currently supplied section is measured (step 206), using the pressure sensor 113 associated with the (first) source, and it is determined whether the measured pressure is above a threshold set for that section (step 208). If the measured pressure is above the threshold then it is determined (step 210) whether the section in which the at least one nozzle 104 determined in step 203 is located has been supplied with fire suppressing agent. If the required section has been supplied then the fire is supressed (step 212) by outputting the agent from the at least one nozzle 104. If the required section has not yet been supplied then a valve 112 is opened (step 214) to supply a next section from the current section of the conduit 108. Steps 206-210 may then be repeated for said next section 110 of the conduit 108 and this can continue until the required section for supplying the determined at least one nozzle 104 has been supplied with fire supressing agent, at which point the fire may be supressed as discussed above.

However, if for any section 110 it is determined that the measured pressure of the agent is below the threshold required for that section, a valve 112 is not opened to supply a next section and instead said any section is bypassed. As shown in Figure 2, this may be implemented by closing the valve(s) 112 used for supplying the "current" section that is now to be bypassed (step 216), and it is then determined whether there is another source 106 available that can supply the at least one nozzle 104 while bypassing the current section (step 218). If it is determined that another source 106 is available then that source 106 is caused to supply a (new) section of the conduit 108 and steps 204-216 may be repeated starting with the section now supplied by this source 106. If it is determined at step 218 that the at least one nozzle 104 cannot be supplied with the agent while bypassing all of the sections 110 for which it was determined that a pressure of the agent inside those sections 110 was below the threshold, the controller 116 may trigger an alarm (step 220) to indicate that the system 100 may not be able to supress the fire (e.g. without intervention). If the fire suppression system 100 is implemented in a vehicle (e.g. train), the alarm may be used to indicate that the vehicle needs to urgently stop. The system 100 may also take any appropriate action to try and at least partly supress the fire, even when the alarm is triggered, such as opening all of the valves 112 between the nozzle(s) identified at step 203 and one or more of the sources 106.

Although Figure 2 shows that a section of the conduit 108 may be bypassed by determining that there is another source 106 available for bypassing that section and causing that source 106 to supply the conduit 108, the system 100 may be operable for, and the method may comprise, determining whether a source 106 that has been used to supply a current section can supply alternative sections of the conduit 108 to bypass that section. In other words, the same source but a different part of the conduit may be used to bypass a section. It will be appreciated that in these embodiments the conduit is not purely linear as shown in the drawings and instead has multiple paths to the source so that one or more sections may be bypassed. When it is determined that this is possible, this may be done additionally or alternatively to causing another source 106 to supply the conduit 108.

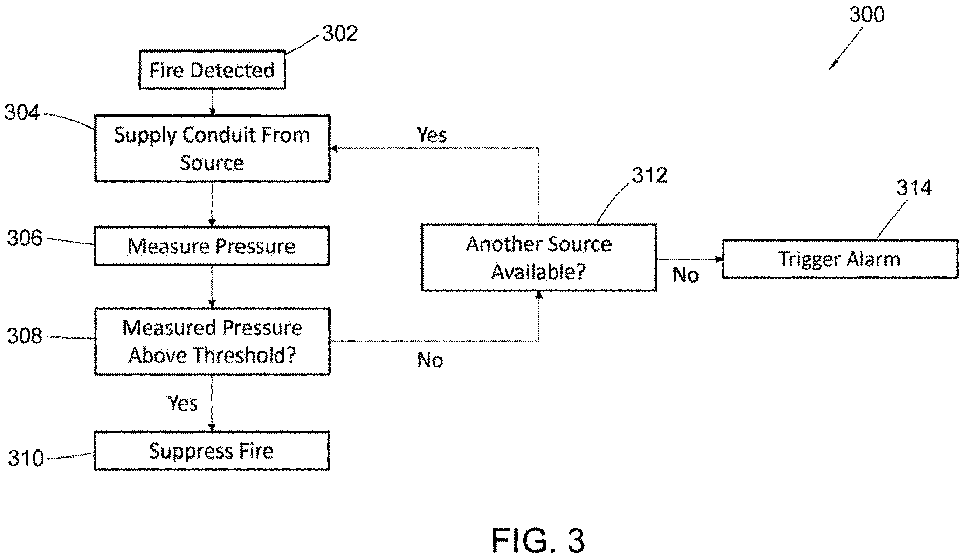

Figure 3 is a flowchart 300 showing an example of an alternative method of operating a fire suppression system that is not in accordance with the invention. In this example, a fire is detected (step 302). In response to the fire being detected, a (entire) conduit for supplying a set of nozzles is supplied with a fire supressing agent from a source of the fire supressing agent (step 304). A pressure of the agent in the conduit is measured (step 306) and it is determined whether the pressure is above a threshold (step 308) that indicates whether the conduit has been suitably supplied with the agent for supplying the nozzles. If it is determined that the measured pressure is above the threshold then (all) the nozzles output the agent to supress the fire (step 310).

In the example of Figure 3, as a pressure of the agent is measured only when the entire conduit has been made accessible to the agent then it is not possible to determine which section of the conduit may be failing to be suitably filled with the agent (e.g. due to a leak). Furthermore, the system is not operable to bypass any sections of the conduit that are failing to be suitably filled. This means that a leak in the conduit may still be detrimental to how effectively the system can operate.

Although the present disclosure has been described with reference to various embodiments, it will be understood by those skilled in the art that various changes in form and detail may be made without departing from the scope defined by the accompanying claims.

For example, although embodiments have been described wherein the system is on a train, it will be appreciated that the system may alternatively be implemented in other vehicles, buildings or structures. In such arrangements, the different sections of the conduit may be arranged in different rooms or areas.

## Claims

1. A fire suppression system comprising:
a controller;
a plurality of nozzles configured to output a fire supressing agent to supress a fire;
one or more sources of fire supressing agent; and
a conduit for supplying the agent from the one or more sources to the plurality of nozzles, wherein the conduit has a plurality of sections and a plurality of valves for controlling which of the plurality of sections the agent is supplied into from the one or more sources; and
wherein the controller is configured to, in response to a fire being detected:
determine at least one nozzle of the plurality of nozzles that is required for supressing the fire;
cause the agent to be supplied into the conduit from the one or more sources; and
control the plurality of valves to supply the agent from the one or more sources to the at least one nozzle via the conduit;
wherein for one or more sections of the plurality of sections of the conduit that the agent is supplied into, the controller is configured to control the plurality of valves by:
determining whether a pressure of the agent inside a current section of the conduit is above or below a threshold; and
when the pressure is above the threshold, opening a valve to supply the agent from the current section into a next section of the conduit; but
when the pressure is below the threshold, controlling the valves to supply the agent to the at least one nozzle while bypassing the current section of the conduit.

2. The fire suppression system of claim 1, wherein for each of plural sections of the plurality of sections of the conduit that the agent is supplied into, the controller is configured to control the plurality of valves by:
determining whether a pressure of the agent inside a current section of the conduit is above or below a threshold; and
when the pressure is above the threshold, opening a valve to supply the agent from the current section into a next section of the conduit; but
when the pressure is below the threshold, controlling the valves to supply the agent to the at least one nozzle while bypassing the current section of the conduit.

3. The fire suppression system of claim 2, wherein said threshold is different for different respective sections of said conduit.

4. The fire suppression system of claim 3, wherein a pressure value is assigned to each section of the conduit for filling each respective section with fire supressing agent, and wherein the controller determines the threshold for any given one of the sections by summing the pressure value for said any given one of the sections with the pressure value(s) for the section(s) that have been used to supply said any given one of the sections with the fire supressing agent.

5. The fire suppression system of any preceding claim, wherein the one or more sources are plural sources of fire supressing agent, and wherein the controller is configured to:
select a first of the one or more sources for supplying the agent to the at least one nozzle; and
cause the agent to be supplied from the first source into the conduit;
wherein for one or more sections of the plurality of sections of the conduit that the agent is supplied into from the first source, the controller is configured to control the plurality of valves by:
determining whether a pressure of the agent inside a current section of the conduit is above or below a threshold; and
when the pressure is above the threshold, opening a valve to supply the agent from the first source into a next section of the conduit via the current section; but
when the pressure is below the threshold, selecting a second source of the one or more sources for supplying the agent to the at least one nozzle and supplying the agent to the at least one nozzle from the second source through a different part of the conduit so as to bypass the current section of the conduit.

6. The fire suppression system of claim 5, wherein the controller is configured to select which of the one or more sources is the first source based on which of the plurality of nozzles are determined to be required to supress the fire.

7. The fire suppression system of any preceding claim, wherein the conduit has a first end and a second end, the one or more sources are plural sources of fire supressing agent comprising a first source and a second source, wherein the first source is connected to the first end of the conduit and the second source is connected to the second end of the conduit.

8. The fire suppression system of any preceding claim, wherein the controller is configured to, when it is determined that a pressure inside the current section of the conduit is below the threshold, control the valves to prevent a further supply of the agent to that current section.

9. The fire suppression system of any preceding claim, wherein the controller is configured to trigger an alarm when it is determined that the at least one nozzle cannot be supplied with the agent without using one of the sections for which it was determined that a pressure of the agent inside that section was below the threshold.

10. A fire suppression system comprising:
a first source of fire supressing agent;
one or more nozzles configured to output the fire supressing agent;
a conduit for supplying the fire supressing agent from the first source to the one or more nozzles, wherein the conduit has a plurality of sections defined between a plurality of valves for controlling which of the plurality of sections the fire suppressing agent is able to be supplied into from the first source;
a first pressure sensor located within the conduit for determining the pressure of the fire supressing agent from the first source; and
control circuitry configured to determine, from the first pressure sensor, whether a pressure of the fire supressing agent inside a first of the sections of the conduit is above or below a threshold; and, if the pressure is above the threshold, open one of the valves so as to supply the fire supressing agent from the first section into an adjacent, downstream section of the conduit; whereas if the pressure is below the threshold, the control circuitry is configured to maintain said one of the valves closed so as to prevent fire supressing agent from being supplied from the first section into the adjacent, downstream section.

11. The fire suppression system of claim 10, comprising:
a second source of fire suppressing agent; and
a conduit from the second source to the one or more nozzles, wherein this conduit has one or more valves therein for controlling the supply of fire suppressing agent from the second source to the one or more nozzles;
wherein the control circuitry is configured such that, when it determines that the pressure of the fire supressing agent in the first section is below said threshold, the control circuitry opens said one or more valves in the conduit from the second source of fire supressing agent so that fire supressing agent is able to be supplied from the second source to the one or more nozzles.

12. A vehicle, such as a train, comprising the fire suppression system of any preceding claim.

13. A method of supressing a fire, comprising:
providing a fire suppression system comprising:
a plurality of nozzles;
one or more sources of fire supressing agent; and
a conduit for supplying the agent from the one or more sources to the plurality of nozzles, wherein the conduit has a plurality of sections and a plurality of valves for controlling which of the plurality of sections the agent can be supplied into from the one or more sources;
and the method further comprising:
determining at least one nozzle of the plurality of nozzles that is required for supressing the fire; and
controlling the plurality of valves to supply the agent from the one or more sources to the at least one nozzle via the conduit by, for one or more sections of the plurality of sections of the conduit that the agent is supplied into:
determining whether a pressure of the agent inside a current section of the conduit is above or below a threshold; and
when the pressure is above the threshold, opening a valve to supply the agent from the current section into a next section of the conduit; but
when the pressure is below the threshold, controlling the valves to supply the agent to the at least one nozzle while bypassing the current section of the conduit.

14. The method of claim 13, comprising controlling the plurality of valves to supply the agent from the one or more sources to the at least one nozzle via the conduit by, for each of plural sections of the plurality of sections of the conduit that the agent is supplied into:
determining whether a pressure of the agent inside a current section of the conduit is above or below a threshold; and
when the pressure is above the threshold, opening a valve to supply the agent from the current section into a next section of the conduit; but
when the pressure is below the threshold, controlling the valves to supply the agent to the at least one nozzle while bypassing the current section of the conduit.

15. The method of claim 13 or 14, wherein the one or more sources are plural sources of fire supressing agent, and wherein the method comprises:
selecting a first source for supplying the agent to the at least one nozzle;
supplying the agent from the first source into the conduit; and
for one or more sections of the plurality of sections of the conduit that the agent is supplied into from the first source:
determining whether a pressure of the agent inside a current section of the conduit is above or below a threshold; and
when the pressure is above the threshold, opening a valve to supply the agent from the first source into a next section of the conduit via the current section; but
when the pressure is below the threshold, selecting a second source for supplying the agent to the at least one nozzle and supplying the agent to the at least one nozzle from the second source through a different part of the conduit so as to bypass the current section of the conduit.
